# EUROPÄISCHE PATENTSCHRIFT

(11) **EP 0 860 233 B1**
(45) Veröffentlichungstag und Bekanntmachung des Hinweises auf die Patenterteilung: **09.01.2002**
(21) Anmeldenummer: 97102954.1
(22) Anmeldetag: 22.02.1997
(51) Int. Cl.: B23Q 3/157

(54) **Werkzeugwechseleinrichtung für Werkzeugmaschinen**
Tool exchanger for machine tools
Changeur d'outils pour machines-outils

(43) Veröffentlichungstag der Anmeldung: 26.08.1998
(73) Patentinhaber: MASCHINENFABRIK BERTHOLD HERMLE AKTIENGESELLSCHAFT, D-78559 Gosheim (DE)
(72) Erfinder: Mattes, Anton, 78585 Bubsheim (DE); Braun, Hans-Dieter, 78665 Frittlingen (DE)
(74) Vertreter: Vetter, Hans, Dipl.-Phys. Dr.

(56) Entgegenhaltungen:
- EP-A- 0 648 574
- FR-A- 1 444 093
- FR-A- 1 514 824
- GB-A- 1 195 638
- US-A- 2 773 430
- PATENT ABSTRACTS OF JAPAN vol. 007, no. 265 (M-258), 25.November 1983 & JP 58 143933 A (MORI TEKKOSHO:KK), 26.August 1983,
- PATENT ABSTRACTS OF JAPAN vol. 011, no. 135 (M-585), 28.April 1987 & JP 61 274834 A (HINO MOTORS LTD), 5.Dezember 1986,

## Beschreibung

Die Erfindung betrifft eine Werkzeugwechseleinrichtung für Werkzeugmaschinen gemäß dem Oberbegriff des Anspruchs 1. Aus einem Magazin werden unterschiedliche Werkzeuge mittels Greifern beispielsweise in eine Werkzeugspindel eingesetzt und beim Wechseln wieder herausgenommen.

Bei einer derartigen, beispielsweise aus der JP-58-143933-A oder der FR-1514824-A bekannten Werkzeugwechseleinrichtung erfährt die dort als Rundmagazin ausgebildete Magazinwand eine Schwenkbewegung um eine vertikale, parallel zur Spindelachse verlaufende Achse, was große Schwenkbewegungen erfordert und daher kein schnelles Auswechseln von Werkzeugen zuläßt.

Weiterhin sind bei einer aus der DE 42 15 697 bekannten Werkzeugwechseleinrichtung zwei vertikal schwenkbare Greifer an einem Wechslerarm angeordnet, der mittels linearer Bewegungen und Schwenkbewegungen zwischen dem Werkzeugmagazin und einer Vertikalspindel hin- und herbewegbar ist. Dabei ist jeweils der eine Greifer leer, um ein Werkzeug aus der Werkzeugspindel herauszuziehen, während der andere Greifer ein neues, einzuwechselndes Werkzeug in die Spindel einführt. Hierbei sind relativ große Arbeitsbewegungen erforderlich, da das Werkzeugmagazin relativ weit von der Werkzeugspindel entfernt ist. Dabei ist eine Vielzahl von Bewegungen erforderlich, nämlich die Bewegungen des Wechslerarms und der Greifer sowie Umsetzungsbewegungen innerhalb des Werkzeugmagazins.

Eine Aufgabe der vorliegenden Erfindung besteht darin, eine Werkzeugwechseleinrichtung zu schaffen, bei der das Werkzeugmagazin beim Wechseln sehr nahe an der Arbeitsspindel positioniert ist, so daß durch einfache und kleine Bewegungen ein schnelles Auswechseln von Werkzeugen möglich ist.

Diese Aufgabe wird durch die Merkmale des Anspruchs 1 gelöst.

Bei der erfindungsgemäßen Werkzeugwechseleinrichtung ist das Werkzeugmagazin selbst als Wechseleinrichtung ausgebildet, wobei Bewegungen der Werkzeuge innerhalb des Werkzeugmagazins gleichzeitig zum direkten Zuführen des gewünschten Werkzeugs zur Arbeitsspindel hin dienen. Eine Schwenkbarkeit der einzelnen Werkzeuggreifer ist infolge der Schwenkbarkeit der gesamten Magazinbahn nicht erforderlich. Durch die einfachen und kurzen Bewegungen ist ein sehr schnelles Wechseln von Werkzeugen und eine kostengünstige Realisierung der Werkzeugwechseleinrichtung möglich. Durch die senkrecht zur Spindelachse verlaufende Schwenkachse der Magazinbahn am von der Werkzeugwechselposition entfernten Endbereich der Magazinbahn wird ein großer Schwenkradius und damit eine möglichst lineare Bewegung des Werkzeugs beim Verschwenken erzielt. Dabei wird auch eine einfache und platzsparende Bewegung des Werkzeugs in und außer Eingriff der Spindel erreicht.

Durch die in den Unteransprüchen aufgeführten Maßnahmen sind vorteilhafte Weiterbildungen und Verbesserungen der im Anspruch 1 angegebenen Werkzeugwechseleinrichtung möglich.

Zur Bewegung der Werkzeuggreifer entlang der Magazinbahn sind diese vorteilhafterweise an einem umlaufenden, insbesondere als Antriebskette ausgebildeten Antriebsstrang angeordnet und/oder werden von diesem angetrieben.

Um eine relativ schmale Gesamtanordnung zu erreichen, besteht die geschlossene Magazinbahn aus zwei im wesentlichen parallelen Bahnbereichen mit entgegengesetzten Bahnrichtungen, wobei an den Endbereichen jeweils Umlenkeinrichtungen vom einen zum anderen Bahnbereich vorgesehen sind. Die Werkzeugwechselposition ist dabei eine Position an einer der Umlenkeinrichtungen, in der ein Werkzeugwechsel relativ ungehindert von der Magazinbahn vonstatten gehen kann. Die Umlenkeinrichtung selbst kann dabei in einfacher und kostengünstiger Weise als Antriebsrad ausgebildet sein.

Zum Verschwenken der Magazinbahn dient zweckmäßigerweise ein Stellzylinder, der vorzugsweise an einer der Werkzeugwechselposition benachbarten Stelle der Magazinbahn angreift.

Zum Schutz der Werkzeugwechseleinrichtung und insbesondere der Werkzeuggreifer und Werkzeuge ist die Magazinbahn bis auf die Werkzeugwechselposition wenigstens teilweise durch eine Schutzhaube überdeckt, wobei sich die die Werkzeuge haltenden Werkzeuggreifer im nach unten geschwenkten Zustand der Magazinbahn außerhalb des Kollisionsbereichs mit der Schutzhaube befinden. Die Schwenkbewegung der Magazinbahn dient somit gleichzeitig zum Einführen und Herausführen eines Werkzeugs aus einer Arbeitsspindel und zum Herausführen der Magazinbahn aus dem Kollisionsbereich mit der Schutzhaube, um eine Antriebsbewegung der an den Werkzeuggreifern gehaltenen Werkzeuge zu ermöglichen. Automatisierte Wechslerklappen sind dadurch nicht mehr erforderlich.

Zur Vorwärtsbewegung der Werkzeuggreifer entlang der Magazinbahn ist eine Antriebsvorrichtung vorgesehen, die vorzugsweise als Schrittantrieb ausgebildet ist, insbesondere als Malteser Antrieb, um eine einfache und schnelle Positionierung von Werkzeugen in der Werkzeugwechselposition zu ermöglichen.

Die Magazinbahn ist in vorteilhafter Weise an einer um eine vertikale Achse schwenkbaren Haltevorrichtung angeordnet, wobei diese vertikale Achse vorzugsweise seitlich der Magazinbahn angeordnet ist. Hierdurch kann die gesamte Magazinbahn aus dem Arbeitsbereich herausgeschwenkt werden, um den Sichtbereich an der Bearbeitungsstelle zu verbessern, um Kollisionen beispielsweise mit einem Spindelschlitten oder Fräskopf zu verhindern und um die Zugänglichkeit beim Messen, Spannen und Beladen zu verbessern.

Für die Schwenkbewegung um die vertikale Achse sind zwei die Schwenkbewegung begrenzende Anschlagpositionen vorgesehen, in denen die Haltevorrichtung jeweils mittels einer Arretiervorrichtung arretierbar ist, um zum einen einen sicheren Werkzeugwechsel und zum anderen ein sicheres Freihalten des Arbeitsraums während der Bearbeitung zu gewährleisten. Zusätzlich sind in vorteilhafter Weise Mittel zur Erkennung der Positionierungen in diesen Anschlagpositionen und zur Sperrung von Arbeitsfunktionen außerhalb der jeweils dafür zugeordneten Anschlagpositionen vorgesehen, um Fehlbedienungen zu verhindern und die Funktionssicherheit zu erhöhen. Die Haltevorrichtung ist dabei im wesentlichen um 90° schwenkbar ausgebildet, und da das gesamte System weggeschwenkt werden kann, sind keine weiteren Schutzeinrichtungen und Abdeckungen erforderlich. Zum Wegschwenken der Werkzeugwechseleinrichtung ist vorzugsweise eine manuelle oder automatische Schwenkvorrichtung vorgesehen.

Die Haltevorrichtung ist im wesentlichen als Haltearm ausgebildet, der schwenkbar an einer mit der Werkzeugmaschine verbindbaren Halteplatte angeordnet ist, so daß die gesamte Werkzeugwechseleinrichtung schnell und einfach an der jeweiligen Werkzeugmaschine montierbar ist.

Ein Ausführungsbeispiel der Erfindung ist in der Zeichnung dargestellt und in der nachfolgenden Beschreibung näher erläutert. Es zeigen:
- Fig. 1: eine Seitenansicht der Werkzeugwechseleinrichtung mit in den Arbeitsbereich eingeschwenkter Magazinbahn,
- Fig. 2: die in Fig. 1 dargestellte Werkzeugwechseleinrichtung in einer Ansicht von rechts in bezug auf Fig. 1 und
- Fig. 3: die Werkzeugwechseleinrichtung in einer Ansicht von oben bei abgenommener Schutzhaube.

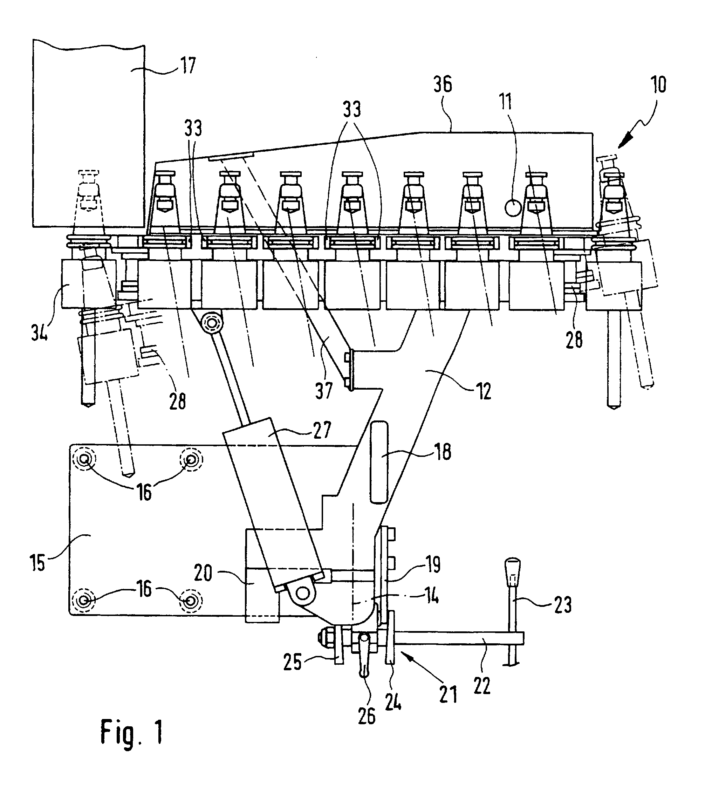

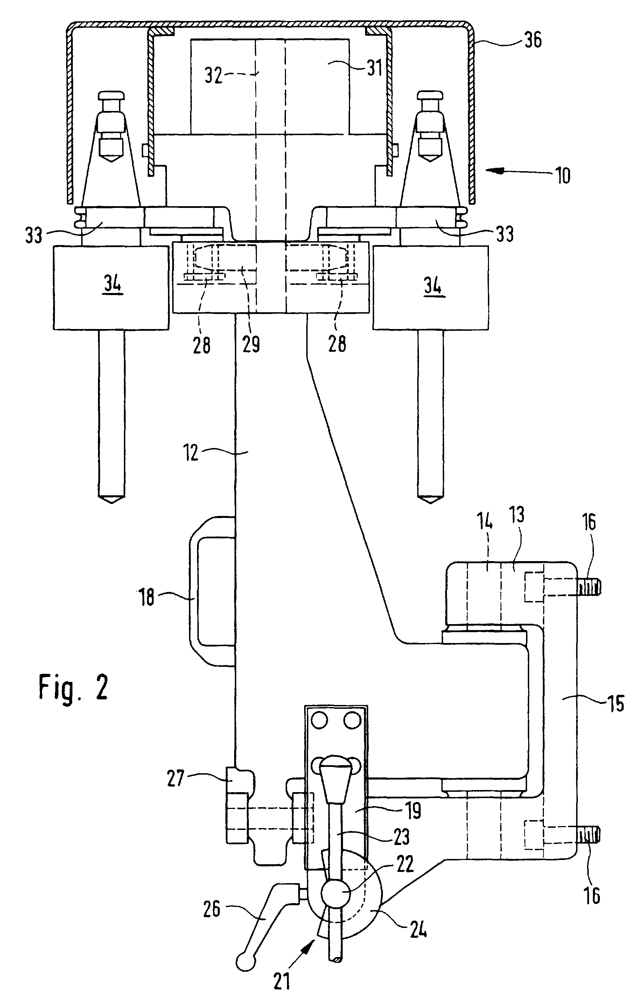

Bei dem in den Fig. 1 bis 3 dargestellten Ausführungsbeispiel ist eine Magazinbahn 10 einer Werkzeugwechseleinrichtung um eine horizontale Achse 11 schwenkbar an einem Haltearm 12 angeordnet, der in einer U-artigen Schwenkhalterung 13 um eine vertikale Achse 14 schwenkbar gelagert ist. Die Schwenkhalterung 13 ist an einer vertikalen Halteplatte 15 montiert, die ihrerseits mittels Halteschrauben 16 an einer Werkzeugmaschine fixierbar ist, von der zur Vereinfachung der Darstellung nur eine vertikale Arbeitsspindel 17 dargestellt ist. Zum manuellen Verschwenken des Haltearms 12 dient ein Handgriff 18, wobei selbstverständlich auch eine motorische Antriebsvorrichtung für den Schwenkvorgang möglich ist.

Der Schwenkvorgang des Haltearms 12 ist auf einen Schwenkbereich von 90° begrenzt. Hierzu dienen zwei um 90° versetzte Anschlagplatten 19, 20 am unteren Bereich des Haltearms 12. Diese gelangen in den beiden Anschlagpositionen in Anlage mit der Schwenkhalterung 13 und können dort mittels einer Arretiervorrichtung 21 fixiert werden. Diese Arretiervorrichtung 21 besteht aus einer drehbar in der Schwenkhalterung 13 gelagerten, horizontalen Arretierwelle 22, die mittels eines Betätigungshebels 23 drehbar ist. Die beiden Anschlagplatten 19, 20 können dann in ihren jeweiligen Anschlagpositionen durch keilartige, auf der Arretierwelle 22 angeordnete Arretierelemente 24, 25 bei einer entsprechenden Drehung der Arretierwelle 22 durch den Betätigungshebel 23 arretiert werden. Ein hebelartiges Klemmglied 26 dient zur zusätzlichen Fixierung der Arretierwelle 22 in den Klemmstellungen.

Der Haltearm 12 erstreckt sich von seinem unteren, an der Schwenkhalterung 13 gelagerten Bereich aus schräg nach oben zur im wesentlichen horizontal angeordneten, um die horizontale Achse 11 schwenkbaren Magazinbahn 10 hin. Die horizontale Achse 11 ist dabei an dem in der in Fig. 1 dargestellten Wechselstellung von der Arbeitsspindel 17 entfernten Endbereich der Magazinbahn 10 angeordnet. Zum Schwenken der Magazinbahn 10 dient dabei ein pneumatisch oder hydraulisch betätigbarer Stellzylinder 27, der mit einem Ende an der Magazinbahn 10 und mit seinem anderen Ende am unteren Bereich des Haltearms 12 gelenkig gelagert ist. Durch diesen Stellzylinder 27 kann die Magazinbahn von ihrer horizontalen Position aus um beispielsweise 10° nach unten geschwenkt werden. Die nach unten geschwenkte Position ist in Fig. 1 gestrichelt dargestellt.

Anstelle eines Stellzylinders 27 können selbstverständlich auch andere Stellglieder vorgesehen sein, beispielsweise magnetische oder elektromotorische Stellglieder.

An der Magazinbahn 10 ist eine endlos umlaufende Kette 28 in nicht näher dargestellten Führungsbahnen geführt. Die Kette 28 wird dabei über zwei Kettenräder 29, 30 geführt und umgelenkt, so daß zwei im wesentlichen parallele Bahnbereiche zwischen den Kettenrädern 29, 30 gebildet werden, die sich bei einer Bewegung der Kette in entgegengesetzten Richtungen bewegen. Der Abstand zwischen den Kettenrädern 29, 30 bestimmt dabei im wesentlichen die Länge der Magazinbahn 10. Eines der Kettenräder 29 wird dabei durch einen motorischen Schrittantrieb 31 über eine Antriebswelle 32 angetrieben. Der Schrittantrieb ist dabei beispielsweise als Malteser Antrieb ausgebildet. Das zweite Kettenrad 30 kann auch durch eine andere Umlenkeinrichtung ersetzt werden.

Jedes Kettenglied der Kette 28 ist mit einem nach außen horizontal abstehenden Werkzeuggreifer 33 verbunden. Anstelle der sechzehn dargestellten Werkzeuggreifer 33 kann selbstverständlich auch eine andere Zahl von Werkzeuggreifern 33 vorgesehen sein. In diesen Werkzeuggreifern 33 werden auswechselbare Werkzeuge 34 für die Arbeitsspindel 17 gehalten. Dabei dient eine in der Längsrichtung der Magazinbahn 10 an einer Umlenkposition des Kettenrads 30 definierte Position eines Werkzeuggreifers 33 als Werkzeugwechselposition 35. Alle Werkzeuggreifer 33 und damit die von ihnen gehaltenen Werkzeuge 34 können mittels des Schrittantriebs 31 schrittweise in diese Werkzeugwechselposition 35 gebracht werden.

Für die Werkzeuggreifer 33 kann selbstverständlich in nicht näher dargestellter Weise eine zusätzliche Führung bzw. Führungsbahn an der Magazinbahn 10 vorgesehen sein, um exakte Positioniervorgänge und einen exakten Bewegungsablauf zu ermöglichen.

Eine Schutzhaube 36 überdeckt die Magazinbahn 10 bis auf die sich jeweils in der Werkzeugwechselposition 35 und der entgegengesetzten entsprechenden Position am Kettenrad 29 befindlichen Werkzeuggreifer 33. In der horizonalen Arbeitsposition der Magazinbahn 10 erstrecken sich die Seitenwände der Schutzhaube 36 bis zu den Werkzeuggreifern 33 nach unten, so daß von diesen aus nach oben vorstehende Bereiche der Werkzeuge 34 in die Schutzhaube 36 hineingreifen. Diese Schutzhaube 36 ist dabei mittels eines Seitenarms 37 am Haltearm 12 so gehalten, daß sie bei einer Schwenkbewegung der Magazinbahn 10 um die horizontale Achse 11 nicht mitgeschwenkt wird. Der Schwenkvorgang der Magazinbahn 10 nach unten mittels des Stellzylinders 27 ist dabei so bemessen, daß die Werkzeuge 34 in der nach unten geschwenkten Position ohne Kollisionsgefahr aus der Schutzhaube 36 herausgeführt werden können. Am von der Werkzeugwechselposition 35 entfernten Ende der Schutzhaube 36 weist diese entweder Durchtrittsöffnungen für die Werkzeuge 34 auf, oder aber sie ist so verlängert, daß sie auch noch den äußersten Werkzeuggreifer 33 in der Umlenkposition mitumgreift.

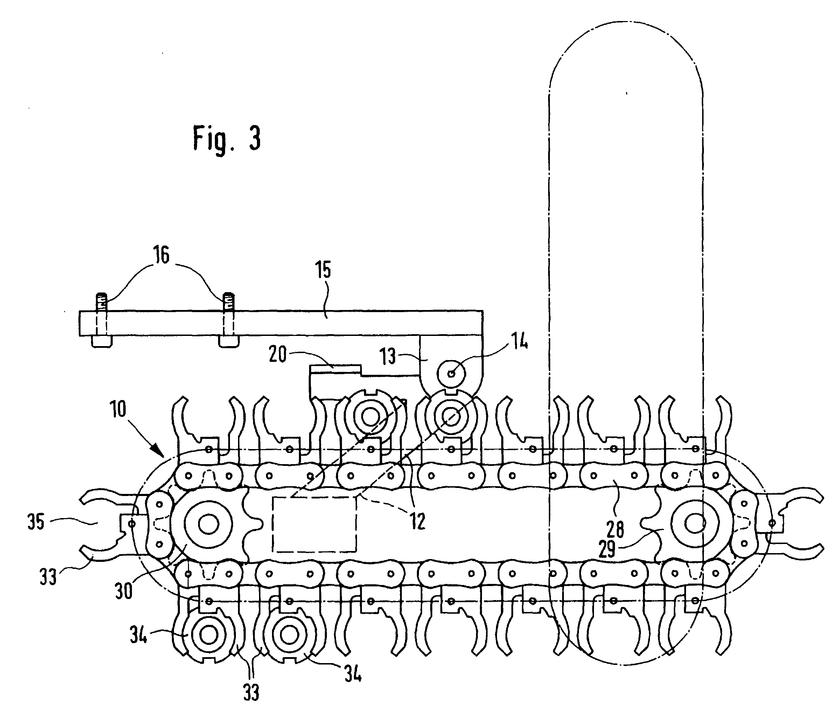

Während der Bearbeitung von Werkstücken wird der Haltearm 12 mittels des Handgriffs 18 bis in die entsprechende Endanschlagposition weggeschwenkt, in der die Magazinbahn 10 die in Fig. 3 dargestellte strichpunktierte Position einnimmt. In dieser Position befindet sich die Magazinbahn 10 weit außerhalb des Arbeitsbereichs der Werkzeugmaschine bzw. der Arbeitsspindel 17, so daß eine ungehinderte Werkstückbearbeitung möglich ist. Durch die Anordnung der vertikalen Achse 14 seitlich der Magazinbahn 10 (siehe Fig. 3) kann die Magazinbahn 10 besonders weit weggeschwenkt werden, um den Arbeitsbereich freizugeben.

Ist ein Werkzeugwechsel erforderlich, so wird die Magazinbahn 10 in die in Fig. 1 dargestellte Werkzeugwechselstellung geschwenkt und mittels der Arretiervorrichtung 21 arretiert. Befindet sich zu diesem Zeitpunkt ein Werkzeug 34 in der Arbeitsspindel 17, so wird ein freier Werkzeuggreifer 33 in die Werkzeugwechselposition 35 gebracht. Nun wird die Arbeitsspindel 17 zur Werkzeugwechselposition 35 hin bewegt, bis das in ihr gehaltene Werkzeug 34 von diesem freien Werkzeuggreifer 33 umfaßt wird. Nach dem Ergreifen des Werkzeugs durch diesen Werkzeuggreifer 33 wird das Werkzeug 34 in der Arbeitsspindel 17 gelöst, und die Magazinbahn 10 wird durch Betätigung des Stellzylinders 27 gemäß Fig. 1 nach unten geschwenkt. Dabei wird das Werkzeug 34 aus der Arbeitsspindel 17 herausgeführt. Nun wird der Schrittantrieb 31 so lange betätigt, bis sich dasjenige Werkzeug 34 in der Werkzeugwechselposition 35 befindet, das nun für die weiteren Arbeitsvorgänge in der Arbeitsspindel 17 erforderlich ist. Beim jetzt erfolgenden Hochschwenken der Magazinbahn 10 wird dieses Werkzeug in die Arbeitsspindel 17 eingeführt und in dieser fixiert. Daraufhin kann der Werkzeuggreifer 33 das Werkzeug loslassen, und die Arbeitsspindel 17 wird wieder von der Werkzeugwechseleinrichtung wegbewegt. Schließlich wird nach dem Lösen der Arretiervorrichtung 21 die Magazinbahn 10 wieder in die seitliche Position gemäß Fig. 3 zurückgeschwenkt und dort arretiert. Bei einer Vertikalbearbeitung von Werkstücken kann das Magazin in der Wechselposition verbleiben.

Anstelle der Bewegung der Arbeitsspindel 17 zur Werkzeugwechseleinrichtung hin kann auch diese alternativ oder zusätzlich mit einer Positioniereinrichtung versehen sein, durch die eine Bewegung zur Arbeitsspindel 17 hin ermöglicht wird.

Im Bereich der Werkzeugwechselposition 35 kann in nicht dargestellter Weise noch eine Ausblaseinrichtung angeordnet sein, um beim Werkzeugwechsel etwaige Bearbeitungsspäne oder sonstige Verunreinigungen oder Bearbeitungsrückstände wegzublasen.

Weiterhin können die beiden Anschlagpositionen des Haltearms 12 mit Positionssensoren versehen sein, um eine automatische Erkennung der Anschlagpositionen zu ermöglichen. Diese Sensoren können dann mit einer elektronischen Sicherheitseinrichtung verbunden sein, durch die beispielsweise ein Betrieb der Arbeitsspindel 17 in der Wechselposition der Magazinbahn 10 ausgeschlossen ist. Weiterhin kann durch eine solche Sicherheitseinrichtung eine Betätigung des Stellzylinders 27 oder des Schrittantriebs 31 nur in der Wechselposition gestattet sein.

## Patentansprüche

1. Werkzeugwechseleinrichtung für Werkzeugmaschinen mit einer Vielzahl von entlang einer geschlossenen Magazinbahn (10) bewegbaren Werkzeuggreifern (33), wobei eine Werkzeuggreiferposition als Werkzeugwechselposition (35) ausgebildet ist, und mit einer Schwenkvorrichtung (11, 27) für die Magazinbahn (10), bei deren Schwenkbewegung ein von dem sich jeweils in der Werkzeugwechselposition (35) befindenden Werkzeuggreifer (33) gehaltenes Werkzeug (34) in eine Werkzeugaufnahme der Werkzeugmaschine (17) einführbar oder ein Werkzeug (34) durch diesen Werkzeuggreifer (33) aus der Werkzeugaufnahme herausführbar ist, **dadurch gekennzeichnet, daß** die senkrecht zur Spindelachse der Werkzeugmaschine (17) verlaufende Schwenkachse (11) der Magazinbahn (10) am von der Werkzeugwechselposition (35) entfernten Endbereich der Magazinbahn (10) angeordnet ist.

2. Werkzeugwechseleinrichtung nach Anspruch 1, **dadurch gekennzeichnet, daß** die Werkzeuggreifer (33) an einem umlaufenden, insbesondere als Antriebskette ausgebildeten Antriebsstrang (28) angeordnet und/oder von diesem angetrieben werden.

3. Werkzeugwechseleinrichtung nach Anspruch 1 oder 2, **dadurch gekennzeichnet, daß** die geschlossene Magazinbahn (10) aus zwei im wesentlichen parallelen Bahnbereichen mit entgegengesetzten Bahnrichtungen besteht, wobei an den Endbereichen jeweils Umlenkeinrichtungen vom einen zum anderen Bahnbereich vorgesehen sind.

4. Werkzeugwechseleinrichtung nach Anspruch 3, **dadurch gekennzeichnet, daß** die Werkzeugwechselposition (35) eine Position an einer der Umlenkeinrichtungen ist.

5. Werkzeugwechseleinrichtung nach Anspruch 3 oder 4, **dadurch gekennzeichnet, daß** eine Umlenkeinrichtung als Antriebsrad (29) ausgebildet ist.

6. Werkzeugwechseleinrichtung nach einem der vorhergehenden Ansprüche, **dadurch gekennzeichnet, daß** die Schwenkachse (11) der Magazinbahn (10) horizontal verläuft.

7. Werkzeugwechseleinrichtung nach einem der vorhergehenden Ansprüche, **dadurch gekennzeichnet, daß** ein Stellzylinder (27) zum Verschwenken der Magazinbahn (10) vorgesehen ist.

8. Werkzeugwechseleinrichtung nach einem der vorhergehenden Ansprüche, **dadurch gekennzeichnet, daß** eine die Magazinbahn (10) bis auf die Werkzeugwechselposition (35) wenigstens teilweise überdeckende Schutzhaube (36) vorgesehen ist, wobei sich die die Werkzeuge (34) haltenden Werkzeuggreifer (33) im nach unten geschwenkten Zustand der Magazinbahn (10) außerhalb des Kollisionsbereichs mit der Schutzhaube (36) befinden.

9. Werkzeugwechseleinrichtung nach einem der vorhergehenden Ansprüche, **dadurch gekennzeichnet, daß** eine die Werkzeuggreifer (33) entlang der Magazinbahn (10) bewegende Antriebsvorrichtung (31) vorgesehen ist.

10. Werkzeugwechseleinrichtung nach Anspruch 9, **dadurch gekennzeichnet, daß** die Antriebsvorrichtung (31) als Schrittantrieb, insbesondere als Malteser Antrieb, ausgebildet ist.

11. Werkzeugwechseleinrichtung nach einem der vorhergehenden Ansprüche, **dadurch gekennzeichnet, daß** die Magazinbahn (10) an einer um eine vertikale Achse (14) schwenkbaren Haltevorrichtung (12) angeordnet ist.

12. Werkzeugwechseleinrichtung nach Anspruch 11, **dadurch gekennzeichnet, daß** die vertikale Achse (14) seitlich der Magazinbahn (10) angeordnet ist.

13. Werkzeugwechseleinrichtung nach Anspruch 11 oder 12, **dadurch gekennzeichnet, daß** für die Schwenkbewegung um die vertikale Achse (14) zwei diese Schwenkbewegung begrenzende Anschlagpositionen vorgesehen sind, in denen die Haltevorrichtung (12) jeweils mittels einer Arretiervorrichtung (21) arretierbar ist.

14. Werkzeugwechseleinrichtung nach Anspruch 13, **dadurch gekennzeichnet, daß** Mittel zur Erkennung der Positionierungen in den Anschlagpositionen und zur Sperrung von Arbeitsfunktionen außerhalb der jeweils dafür zugeordneten Anschlagposition vorgesehen sind.

15. Werkzeugwechseleinrichtung nach einem der Ansprüche 11 bis 13, **dadurch gekennzeichnet, daß** die Haltevorrichtung (12) im wesentlichen um 90° schwenkbar ausgebildet ist.

16. Werkzeugwechseleinrichtung nach einem der Ansprüche 11 bis 15, **dadurch gekennzeichnet, daß** eine manuelle oder automatische Schwenkvorrichtung (18) für die Haltevorrichtung (12) vorgesehen ist.

17. Werkzeugwechseleinrichtung nach einem der Ansprüche 11 bis 16, **dadurch gekennzeichnet, daß** die Haltevorrichtung (12) im wesentlichen als Haltearm ausgebildet ist, der schwenkbar an einer mit der Werkzeugmaschine verbindbaren Halteplatte (15) angeordnet ist.

## Claims

1. Tool changer for machine tools, with a multiplicity of tool holders (33) movable along a continuous magazine track (10), wherein one tool holder position is designed as tool-change position (35), and with a swivelling device (11, 27) for the magazine track (10), the swivelling movement of which allows a tool (34) held in each case by the tool holder (33) in the tool-change position (35) to be inserted in a tool mounting of the machine tool, or a tool (34) to be taken by this tool holder (33) from the tool mounting, **characterized in that** the swivel axis (11) of the magazine track (10) running at right-angles to the spindle axis of the machine tool (17) is located on the end section of the magazine track (10) which is furthest from the tool-change position (35).

2. Tool changer according to claim 1, **characterized in that** the tool holders (33) are mounted on a circumferential drive train (28), in particular in the form of a drive chain, and/or are driven by it.

3. Tool changer according to claim 1 or 2, **characterized in that** the continuous magazine track (10) is comprised of two substantially parallel track sections with opposing track directions, with devices for switching from one track section to the other provided at each end section.

4. Tool changer according to claim 3, **characterized in that** the tool-change position (35) is a position at one of the switching devices.

5. Tool changer according to claim 3 or 4, **characterized in that** one switching device is in the form of a drive gear (29).

6. Tool changer according to any of the preceding claims, **characterized in that** the swivel axis (11) of the magazine track (10) runs horizontally.

7. Tool changer according to any of the preceding claims, **characterized in that** an operating cylinder (27) is provided for swivelling the magazine track (10).

8. Tool changer according to any of the preceding claims, **characterized in that** a protective cover (36) is provided for covering the magazine track (10) at least partially as far as the tool-change position (35), with the tool holders (33) holding the tools (34) lying outside the zone of collision with the protective cover (36) when the magazine track (10) is swivelled downwards.

9. Tool changer according to any of the preceding claims, **characterized in that** a drive unit (31) for moving the tool holders (33) along the magazine track (10) is provided.

10. Tool changer according to claim 9, **characterized in that** the drive unit (31) is in the form of a step drive, in particular a Maltese cross drive.

11. Tool changer according to any of the preceding claims, **characterized in that** the magazine track (10) is mounted on a holding fixture (12) which is able to swivel around a vertical axis (14).

12. Tool changer according to claim 11, **characterized in that** the vertical axis (14) is positioned at the side of the magazine track (10).

13. Tool changer according to claim 1 or 12, **characterized in that** two stop positions limiting the swivel movement around the vertical axis (14) are provided, in which each of the holding fixtures (12) may be locked by means of a locking device (21).

14. Tool changer according to claim 13, **characterized in that** means are provided for detecting positions in the stop positions and for blocking operating functions outside the respectively assigned stop position.

15. Tool changer according to any of claims 11 to 13, **characterized in that** the holding fixture (12) is designed to be capable of swivelling essentially through 90°.

16. Tool changer according to any of claims 11 to 15, **characterized in that** a manual or automatic swivelling device (18) is provided for the holding fixture (12).

17. Tool changer according to any of claims 11 to 16, **characterized in that** the holding fixture (12) is essentially in the form of a retaining arm, mounted pivotably on a retaining plate (15) which may be connected to the machine tool.

## Revendications

1. Dispositif de changement d'outil pour machines-outils comportant un grand nombre de pinces à outil (33) déplaçables le long d'une voie de magasin (10) fermée, une position de pince à outil étant conçue en tant que position de changement d'outil (35), et comportant un dispositif de pivotement (11, 27) pour la voie de magasin (10), dont le mouvement de pivotement permet d'introduire un outil (34), maintenu par la pince à outil en position de changement d'outil (35), dans un logement d'outil de la machine-outil (17) ou d'extraire un outil (34) du logement d'outil au moyen de cette pince à outil (33), **caractérisé en ce que** l'axe de pivotement (11) de la voie de magasin (10), lequel s'étend perpendiculairement à l'axe de broche de la machine-outil (17), est disposé dans la zone terminale, éloignée de la position de changement d'outil (35), de la voie de magasin (10).

2. Dispositif de changement d'outil selon la revendication 1, **caractérisé en ce que** la pince à outil (33) est disposée sur une ligne cinématique (28), réalisée en particulier en tant que chaîne d'entraînement, et/ou est entraînée par celle-ci.

3. Dispositif de changement d'outil selon la revendication 1 ou 2, **caractérisé en ce que** la voie de magasin (10) fermée est constituée de deux zones de voie sensiblement parallèles avec des sens de voie opposés, des dispositifs de renvoi d'une zone de voie à l'autre étant prévus dans chacune des zones terminales.

4. Dispositif de changement d'outil selon la revendication 3, **caractérisé en ce que** la position de changement d'outil (35) est une position au droit de l'un des dispositifs de renvoi.

5. Dispositif de changement d'outil selon la revendication 3, **caractérisé en ce qu'**un dispositif de renvoi est réalisé en tant que roue d'entraînement (29).

6. Dispositif de changement d'outil selon l'une des revendications précédentes, **caractérisé en ce que** l'axe de pivotement (11) de la voie de magasin (10) s'étend horizontalement.

7. Dispositif de changement d'outil selon l'une des revendications précédentes, **caractérisé en ce qu'**il est prévu un cylindre de réglage (27) pour le pivotement de la voie de magasin (10).

8. Dispositif de changement d'outil selon l'une des revendications précédentes, **caractérisé en ce qu'**il est prévu un capot de protection (36) qui recouvre au moins partiellement la voie de magasin (10), à l'exception de la position de changement d'outil (35), les pinces à outil (33), qui maintiennent les outils (34), se trouvant à l'extérieur de la zone de collision avec le capot de protection (36), lorsque la voie de magasin (10) est pivotée vers le bas.

9. Dispositif de changement d'outil selon l'une des revendications précédentes, **caractérisé en ce qu'**il est prévu un dispositif d'entraînement (31) qui déplace les pinces à outil (33) le long de la voie de magasin (10).

10. Dispositif de changement d'outil selon la revendication 9, **caractérisé en ce que** le dispositif d'entraînement (31) est réalisé en tant que dispositif d'entraînement pas à pas, en particulier en tant que dispositif d'entraînement en croix de Malte.

11. Dispositif de changement d'outil selon l'une des revendications précédentes, **caractérisé en ce que** la voie de magasin (10) est disposée sur un dispositif de maintien (12) qui peut pivoter autour d'une axe vertical (14).

12. Dispositif de changement d'outil selon la revendication 11, **caractérisé en ce que** l'axe vertical (14) est disposé sur le côté de la voie de magasin (10).

13. Dispositif de changement d'outil selon la revendication 11 ou 12, **caractérisé en ce qu'**il est prévu, pour le mouvement de pivotement autour de l'axe vertical (14), deux positions de butée qui limitent ce mouvement de pivotement et dans chacune desquelles le dispositif de maintien (12) peut être bloqué au moyen d'un dispositif de blocage (21).

14. Dispositif de changement d'outil selon la revendication (13), **caractérisé en ce qu'**il est prévu des moyens de détection des positionnements dans les positions de butée et de verrouillage de fonctions de travail à l'extérieur de la position de butée associée à chacune de ces fonctions.

15. Dispositif-de changement d'outil selon l'une des revendications 11 à 13, **caractérisé en ce que** le dispositif de maintien (12) est réalisé de manière à pouvoir pivoter sensiblement de 90°.

16. Dispositif de changement d'outil selon l'une des revendications 11 à 15, **caractérisé en ce qu'**il est prévu un dispositif de pivotement (18) manuel ou automatique pour le dispositif de maintien (12).

17. Dispositif de changement d'outil selon l'une des revendications 11 à 16, **caractérisé en ce que** le dispositif de maintien (12) est réalisé essentiellement en tant que bras de maintien qui est disposé pivotant sur une plaque de maintien (15) qui peut être reliée à la machine-outil.
